# EUROPEAN PATENT SPECIFICATION

(11) **EP 4 046 867 B1**
(45) Date of publication and mention of the grant of the patent: **02.12.2026**
(21) Application number: 22156703.5
(22) Date of filing: 15.02.2022
(51) Int. Cl.: B60P 3/22

(54) **PUMP DESIGN AND OPERATION**
PUMPENENTWURF UND -BETRIEB
CONCEPTION ET FONCTIONNEMENT DE POMPE

(30) Priority: 23.02.2021 DK PA202170085
(43) Date of publication of application: 24.08.2022
(73) Proprietor: HMK Bilcon A/S, 9260 Gistrup (DK)
(72) Inventor: NIELSEN, Erik Møldrup, 9270 Klarup (DK); HANSEN, Mads C. Julin, 9320 Hjallerup (DK)
(74) Representative: Guardian IP Consulting I/S

(56) References cited:
- EP-B1- 2 301 800
- US-A- 5 964 258
- US-A1- 2008 095 639

## Description

### TECHNICAL FIELD

The present disclosure relates to the design and operation of a vehicular fluid dispensing system installed on a vehicle, a trailer, or a stand-alone tank construction.

### BACKGROUND

A variety of vehicular constructions are used when transporting fluids. A vehicle with a rigid chassis construction on which a fluid tank is installed is referred to as a rigid tank truck. Another construction is the combination of a vehicle to which one or more trailers can be attached. The vehicle provides the tractor force to haul the one or more trailers and any goods stored on or in the trailers. This trailer construction provides flexibility as it allows for the vehicle to haul different types of trailers, among these are tank trailers, which are designed to carry fluids. Further, a stand-alone tank construction, which is designed to allow a fluid tank to be moved by truck, train, ship, airplane, etc, is also used to transport fluid.

The fluid tanks will often, but not always, have the appearance of a horizontally lying cylindrical tank. The fluid tank, also known as the reserve or reservoir, is usually comprised of a plurality of compartments as this construction has a number of advantages such as allowing for the transportation of different fluids stored in separate compartments.

To drain the compartment(s) of a fluid tank, a fluid dispensing system is installed on the rigid tank truck, on the tank trailer, or as part of the stand-alone tank construction. A fluid-transfer pump within the dispensing system moves fluid from the compartment(s) towards and outlet. A suitable pump, often powered by a vehicle engine, is connected to a conduit system, which can transport the fluid from the fluid tank compartment(s) via a conduit inlet to a conduit outlet, for example to a hose connection. While running, the pump is lubricated and cooled by the fluid it is moving.

When emptying a fluid tank compartment, it is important to remove as much of the fluid from the tank as possible to diminish contamination of the fluid to be stored in the tank next. Therefore, the pump is run for as long as possible until it starts to overheat due to no longer being lubricated and cooled by fluid. When this happens, the pump is stopped, and either the small amount of fluid left in the fluid tank is allowed to remain there or other means are used to try and reduce the amount of leftover fluid in the tank.

The pump has a comparatively high energy consumption when in use, and at the same time the pump constitutes a wear part, which is expensive to replace. Additionally, as the fluid-transfer pump is often powered by a vehicle engine, which therefore must run to supply power, the running of the pump has an environmental cost in addition to the financial one.

US 5 964 258 A discloses a bulk cooking oil supply and disposal transport system and method for the supply of cooking oil to and the removal of waste oil from a receiving facility where an oil conduit system is connected with the supply and waste container to selectively deliver and remove oil through oil fittings. A first fluid meter measures the amount of cooking oil delivered to the receiving facility and a second fluid meter measures the amount of waste oil removed from the receiving facility and a control device receives signals indicating the level or amount of oil delivered or removed through the oil conduit system. Signals are generated by sensors at the receiving facility or from the fluid meters monitoring flow through the system. A data reporting device is provided on the vehicle to document the amount of cooking oil delivered to and the amount of waste oil received from the receiving facility.

### SUMMARY

It is an object of some embodiments to solve or mitigate, alleviate, or eliminate at least some of the above or other drawbacks. In particular, it is desirable to reduce the run-time of the pump and, further, to reduce the run-time where fluid is not moving past the pump.

In a first aspect is provided a vehicular fluid dispensing system, in a second aspect is provided a rigid tank truck, tank trailer, or stand-alone tank construction comprising a vehicular fluid dispensing system according to the first aspect, and in a third aspect is provided a method of operating a vehicular fluid dispensing system. In the different aspects, the features having the same name are similar and therefore the descriptions and explanations of features in any aspect apply to those features in another aspect.

In the first aspect, a vehicular fluid dispensing system is provided. In the system, a conduit inlet is configured to connect to a fluid tank, and the conduit inlet is part of a fluid conduit system that has a conduit inlet and a conduit outlet. The fluid conduit system is configured to transport fluid between the fluid tank and the conduit outlet. A fluid-transfer pump is connected to the fluid conduit system and configured to move fluid received by the conduit inlet towards the conduit outlet, when in use.

A first sensor in the system is configured to measure at least a first parameter at a first measurement position downstream from the conduit inlet and upstream from the fluid-transfer pump. From the measurement, the first sensor provides a first sensor signal in response.

A control system is configured to receive the first sensor signal from the first sensor and to control an operation of the fluid-transfer pump based at least in part on the received first sensor signal.

A vehicular fluid dispensing system is used in connection with e.g. rigid tank trucks, tank trailers, or stand-alone tank constructions, which have a large fluid tank and are used to transport fluid on roads, rails, by water or by air. In some embodiments, the vehicular fluid dispensing system further comprises the fluid tank, which is connected to the fluid conduit system. A fluid conduit system connects to the fluid tank via a conduit inlet and is used to transport fluid from the fluid tank towards a conduit outlet, which will usually have some sort of coupling or connector to connect with e.g. a hose or pipe, etc. Different types of fluid may be dispensed using the vehicular fluid dispensing system, e.g. oil, gasoline, methanol, ethanol, bio-fuels, other fluid fuels, such as mixes of fuels, etc.

The exact structure of the fluid conduit system will be designed for the task at hand and therefore depend on a number of factors such as, but not limited to, the type of fluid to be dispensed, the size of the system, regulatory demands, etc. Therefore, the design parameters of the fluid conduit system may vary greatly. The first measurement position, is downstream from the conduit inlet and upstream from the fluid-transfer pump such that any fluid flowing between the conduit inlet and the fluid-transfer pump will pass the first measurement position.

Controlling the operation of the pump based at least in part on measurements from two sensors placed upstream from the pump allows for an optimized use of the pump by not running it unnecessarily or running it at a lower power.

To have the best performance, the first measurement position may advantageously be chosen such that it is placed above the port inlet, where the fluid enters the pump and below the conduit inlet such that the fluid will be aided by gravity to flow towards the pump, i.e. above and below are given with respect to gravity. Thus, in some embodiments, the fluid-transfer pump comprises a port inlet and the first measurement position is at a location that is gravitationally lower than the conduit inlet and gravitationally higher than the port inlet of the fluid-transfer pump.

The first sensor is configured to measure one or more parameters of a fluid at the first measurement position and the first sensor may be positioned at or close to the first measurement position, or it may be made up of parts, which can be positioned a distance apart and possibly only part of the first sensor is positioned near or at the first measurement position. For example, the first sensor may comprise a probe, which is positioned near or at the first measurement position and which is connected to the rest of the sensor e.g. via a wire.

In some embodiments, the first sensor is an optical sensor, a mechanical sensor, a thermistor, a conductivity sensor, a flow sensor, a pressure sensor or a type of proximity sensor. A mechanical sensor may be a float level sensor. Preferably, the first sensor will provide a sensor signal that allows the control system to determine the presence of and/or estimate the amount of fluid that is in the fluid conduit system at or near the first measurement position. An optical sensor has the advantages that it affects the flow minimally, and it can be designed for measurements on one or more specific fluids. Further, the optical sensor in a proximity-sensing arrangement directly provides a measure of the presence and amount of fluid as the fluid passes through an emitted light beam and reflects light, which is detected by a receiver. However, other types of sensors, such as other types of proximity sensors, which can detect fluid can be used to provide this type of input for the control system.

The first sensor signal is sent to and received by the control system, which uses the data comprised in the first sensor signal to determine whether and how to control an operation of the fluid-transfer pump. The first sensor signal may directly provide a measure of the presence and amount of fluid and/or the data in the signal may need to be interpreted by the control system. The control system is further configured to interpret the first sensor signal to arrive at a measure of the presence of and/or amount of fluid present in the fluid conduit system at the first measurement position.

Controlling an operation of the pump may entail one or more of: starting or stopping pumping, increasing or decreasing pumping power, and/or reversing pumping action. For example, the control system may be further configured to arrange for the fluid-transfer pump to cease or reduce its pumping power in response to a determination that the amount of fluid at the first measurement position is below a predetermined minimum level. The control system further receives data from the fluid-transfer pump itself, and from a second sensor, and use the data to at least in part base its control of the operation of the fluid-transfer pump thereon. Thus, in some embodiments, the control system is further configured to receive data from the fluid-transfer pump and to control the operation of the fluid-transfer pump based at least in part thereon.

If the fluid-transfer pump is powered by an engine of a tank truck, or by an engine of a tractor vehicle connected to a tank trailer, or by an engine connected to the stand-alone tank construction on which (respectively) the fluid dispensing system is installed, then ceasing pumping or decreasing the pumping power will result in less energy being required from the engine. In this way, the use of the improved fluid dispensing system described herein provides for a way to reduce the use of the engine on a tank truck or tractor vehicle. In some cases, if the engine was only used for running the fluid-transfer pump, the engine may even be turned off. Thus, in some embodiments, the fluid-transfer pump is configured to be powered by an engine of a tank truck on which the fluid dispensing system is installed, or by an engine of a tractor vehicle connected to a tank trailer on which the fluid dispensing system is installed, or by an engine connected to the stand-alone tank construction on which the fluid dispensing system is installed.

A second sensor is installed in the fluid dispensing system to provide a second measurement, which the control system uses in its control of the fluid-transfer pump.

Thus, the fluid dispensing system further comprises a second sensor configured to measure at least a second parameter at a second measurement position downstream from the conduit inlet and upstream from the fluid-transfer pump, and further configured to provide a second sensor signal in response thereto, and wherein the control system is further configured to receive the second sensor signal from the second sensor and to control an operation of the fluid-transfer pump based at least in part thereon. The second sensor may be the same type as the first sensor or a different type of sensor. For example, the second sensor may be an optical sensor, a mechanical sensor, a thermistor, a conductivity sensor, a flow sensor, a pressure sensor, or a proximity sensor. One or more sensors in addition to the first sensor could provide for the control system to know even earlier whether the amount of fluid passing through the system is diminishing. For example, the first and/or second sensor could be a sensor, which detects vibration in the fluid conduit system, e.g. a sensor that can be used for machine vibration monitoring, where an increase in vibrations could indicate that air instead of liquid is passing through the fluid conduit system.

After the control system receives the first and second sensor signal and/or data from the pump, it may alert a user by one or more notifications, such as a visual, an audible or a tactile notification, or via a user interface. Thus, in some embodiments, the control system is further configured to notify a user and/or a user interface about the results of measurements from any connected sensor(s) and/or a status of the fluid-transfer pump. Notifying the user directly or via a user interface allows for the user to take action based on the notification such as restarting the pump, checking the tank, stop the dispensing of fluid, etc.

In the second aspect is provided a rigid tank truck, tank trailer, or stand-alone tank construction comprising a vehicular fluid dispensing system according to the first aspect. In the third aspect is provided a method of operating a vehicular fluid dispensing system according to claim 1.

The method comprises the steps of:
- turning on the pumping power of the fluid-transfer pump to cause fluid received by the conduit inlet to move towards the conduit outlet,
- measuring, by the first sensor, the first parameter and providing a first sensor signal in response thereto,
- measuring, by the second sensor, the second parameter and providing the second sensor signal in response thereto,
- providing data by the fluid-transfer pump,
- receiving, by the control system, the first sensor signal, the second sensor signal, and the data from the fluid-transfer pump, and controlling an operation of the fluid-transfer pump based at least in part on the first sensor signal,
- determining, by the control system, whether a series of first sensor signals indicate that less and less fluid is detected at the first measurement position, and
if so, decreasing gradually the pumping power of the fluid-transfer pump.

Additional features and advantages will be made apparent from the following detailed description with reference to the accompanying drawings.

### BRIEF DESCRIPTION OF THE FIGURES

In the following, exemplary embodiments are described in more detail with reference to the appended drawings, wherein:
Figure 1 is a schematic drawing of a vehicular fluid dispensing system receiving power from an engine according to some embodiments;
Figure 2 is a schematic drawing of parts of a vehicular fluid dispensing system according to some embodiments;
Figure 3 is a schematic showing part of a vehicular fluid dispensing system according to some embodiments;
Figure 4 is a schematic showing part of a vehicular fluid dispensing system according to some embodiments;
Figure 5 is a flow chart of the method of operating a vehicular fluid dispensing system according to some embodiments.

### DETAILED DESCRIPTION

Embodiments of the present disclosure will be described and exemplified more fully hereinafter with reference to the accompanying drawings. The description disclosed herein can, however, be realized in many different forms and should not be construed as being limited to the embodiments set forth herein. The skilled person will understand that the accompanying drawings are schematic and simplified for clarity and therefore merely show details which are essential to the understanding of the invention, while other details have been left out. Like reference numerals refer to like elements throughout. Like elements will therefore not necessarily be described in detail with respect to each figure.

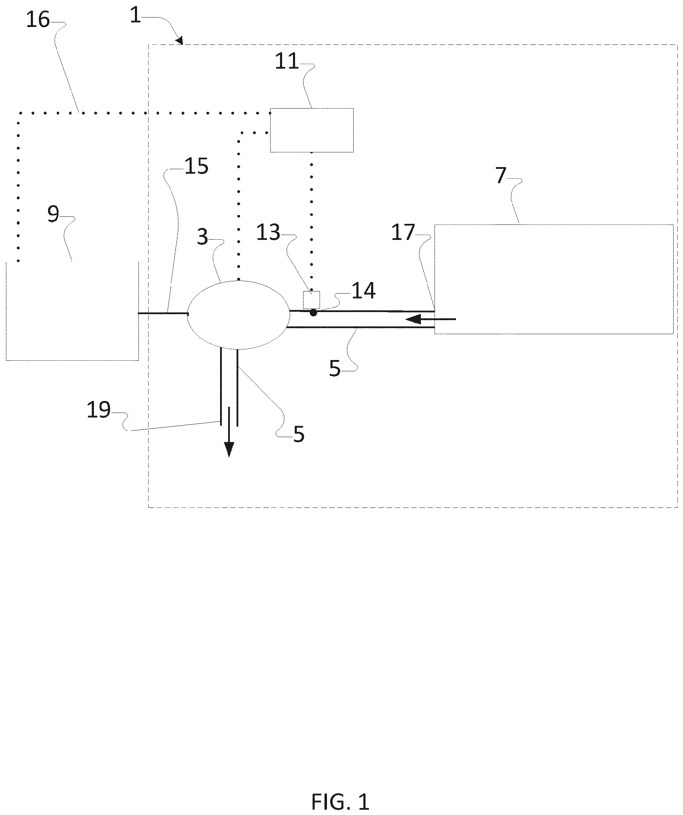

Figure 1 is a schematic drawing of a vehicular fluid dispensing system 1 receiving power from an engine 9. A fluid conduit system 5 is configured to transport a fluid from a conduit inlet 17 to a conduit outlet 19. The conduit inlet 17 is connected to a fluid tank 7 such that fluid may flow from the fluid tank 7 towards the conduit outlet 19. The schematic merely illustrates the connections and possible relative positions between the components shown as the structure of a fluid conduit system and the components around it varies from one system to another.

A fluid-transfer pump 3 is connected to the fluid conduit system 5 and, when pumping, acts to move fluid received at the conduit inlet 17 towards the conduit outlet 19. The fluid-transfer pump may be any type of pump suitable for the system requirements such as the type of fluid to be moved and dimensions of the fluid conduit system. A fluid-transfer pump has a pump port inlet and a pump port outlet, which are also called a suction and discharge port on non-reversible pumps. When the pump is pumping, the fluid coming from the fluid tank 7 will enter the pump port inlet and exit the pump port outlet (unless the pump direction is reversed).

A first sensor 13 is installed downstream from the conduit inlet 17 and upstream from the fluid-transfer pump 3 to measure at a first measurement position. The first sensor measures 13 a first parameter, and possibly further parameters, and provides a first sensor signal in response to the measurement.

The first sensor signal is sent to a control system 11, which is in communication with both the first sensor 13 and the fluid-transfer pump 3 via communication links 16. The control system 11 uses the first signal, and possibly other data, to control the operation of the fluid-transfer pump 3. For example, if the first signal indicates that very little or no fluid is detected at the first measurement position 14, the control system 11 can stop the pumping power of the fluid-transfer pump 3. This will prevent the pump 3 from running for an extended period of time with no fluid being moved through the it. Alternatively, the control system 11 can reduce the pumping power of the fluid-transfer pump 3. For example, if a series of first sensor signals indicate that less and less fluid is detected at the first measurement position 14, the pumping power of the fluid-transfer pump 3 can be gradually decreased. Such an advanced control of the fluid-transfer pump 3 can spare the pump 3 from running/pumping needlessly and thus save energy. Additionally, it is hard on the fluid-transfer pump 3, when it runs dry, i.e. when no or very little fluid passes it and instead air, which does not lubricate and cool as well, finds its way to the pump port inlet. Avoiding having extended periods of time, where the pump 3 runs dry, will reduce pump wear and may result in fewer breakdowns and longer life of the pump 3.

The fluid-transfer pump 3 may be powered, e.g. via an electrical connection 15, by the engine 9 of a tank truck or engine 9 of a tractor vehicle connected to a tank trailer on which the fluid dispensing system 1 is installed. Thus, reducing power or pumping time means the engine 9 will have to deliver less energy to the pump 3. Often, powering the fluid-transfer pump 3 is the only reason the engine 9 is running, while the truck or tractor vehicle is stationary, and in these cases, stopping the pump 3 sooner also allows for the engine 9 to be turned off sooner.

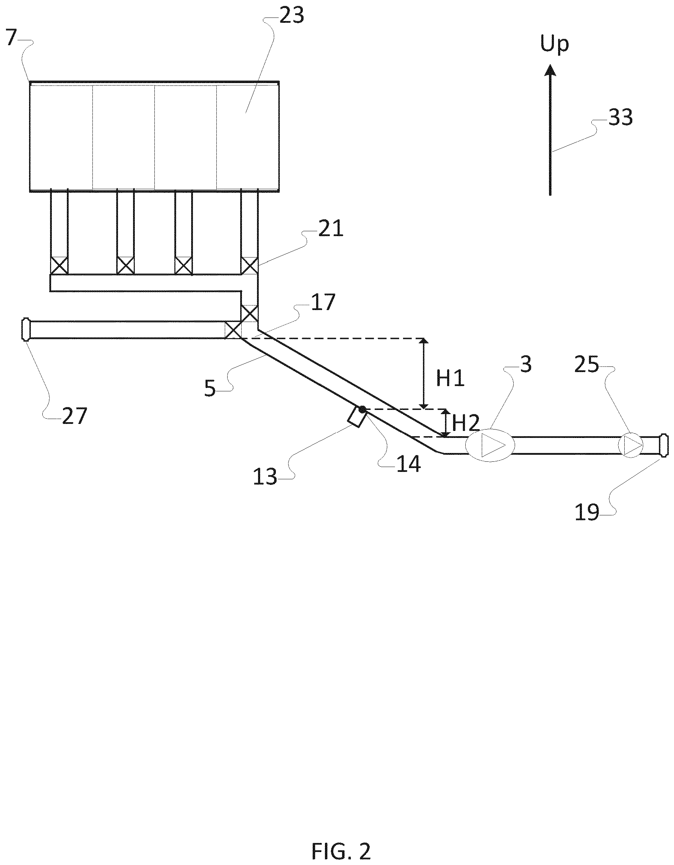

Figure 2 is a schematic drawing of parts of a vehicular fluid dispensing system 1 according to some embodiments. A fluid conduit system 5 is configured to transport a fluid from a fluid tank 7 to a conduit outlet 19. The fluid tank 7 has a plurality of compartments 23, which each connect to the fluid conduit system 5. A number of valves 21 are placed at junctions in the fluid conduit system 5 to allow for selection of which compartment to drain fluid from and for routing of the fluid within the conduit system 5.

A secondary connection point 27 provides a connection to an external fluid reservoir such as e.g. a tank trailer towed behind, another rigid tank/trailer tank or other type of tank. In such a setup the pump 3 can be used to transfer fluid from the external fluid reservoir to the outlet 19 of the dispensing systems 1.

Fluid in the conduit system 5 can be moved towards the conduit outlet 19 by the pumping force from a fluid-transfer pump 3. Upstream from the conduit outlet 19 and downstream from the fluid-transfer pump 3, an optional gauge 25 measures the amount of fluid that has been dispensed. Optionally, the pump may have an outlet through which the fluid flows back towards the fluid tank 7 to allow for self-loading e.g. from the external inlet provided by the secondary connection point 27. The flow back towards the fluid tank 7 may also be gauged.

An optical sensor 13 measures the amount of fluid in the fluid conduit system 5 at a first measurement position 14, which is downstream from the conduit inlet 17 and upstream from the fluid-transfer pump 3. To optimize the measurements done by the optical sensor 13, the first measurement position 14 is located such that it is gravitationally lower than the conduit inlet 17 by a vertical distance H1 and gravitationally higher than the port inlet of the fluid-transfer pump 3 by a vertical distance H2. An arrow 33 shows the vertical direction.

The best performance will be achieved, when the first measurement position 14 is located such that the fluid flowing towards the pump 3 will always pass the measurement point 14. Additionally, the measurement point 14 should be located such that fluid will flow past it and not remain at the measurement point 14.

While the fluid-transfer pump 3 is running and moving fluid towards the conduit outlet 19, the optical sensor 13 can detect when the amount of fluid passing the first measurement position 14 diminishes.

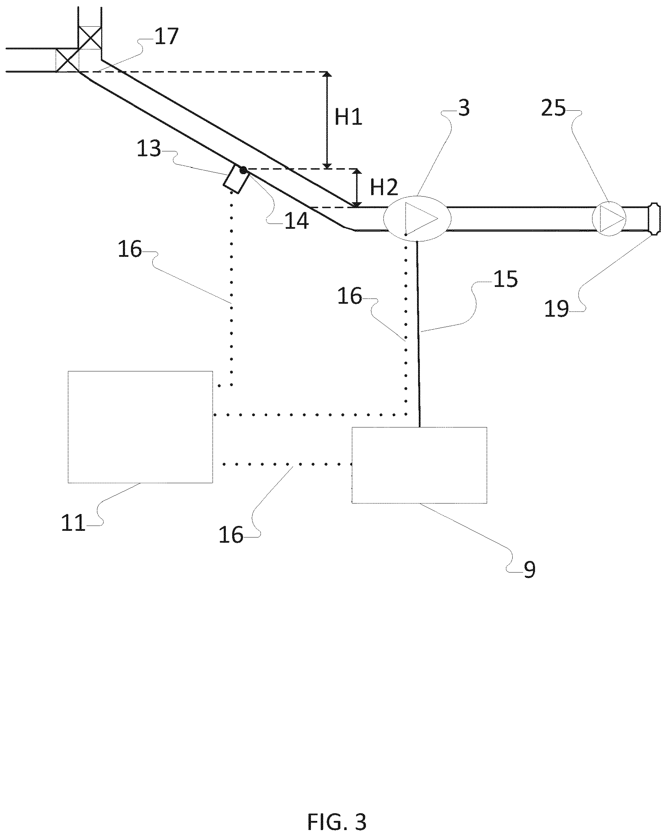

Figure 3 is a schematic showing part of a vehicular fluid dispensing system 1 according to some embodiments and an engine 9 of the tank truck, or tractor vehicle connected to a tank trailer, on which the fluid dispensing system 1 is installed.

The fluid conduit system 5 in fig. 3 is similar in construction to that shown in fig. 2. An optical sensor 13 measures a first parameter, which indicates the presence of and/or amount of fluid in a fluid conduit system at a measurement position 14 upstream from a fluid-transfer pump 3 and downstream from a conduit inlet 17. The optical sensor generates a first sensor signal in response to the measurement of the first parameter and transmits the first sensor signal to a control system 11 via a communication link 16.

The fluid-transfer pump 3 is powered by the engine 9 via an electrical connection 15. Thus, for the fluid-transfer pump 3 to run, the engine 9 must be running also to supply power to the pump 3. The pump 3 sends data such as e.g. operational status, pumping setting, error messages, etc. to the control system 11 via a communication link 16 between the pump 3 and control system 11.

The communication links 16 between the control system 11 and other components may each be wired or wireless or both.

The control system 11 thus receives two sets of data via communications links 16: the first sensor signal and a set of data from the pump 3, and it uses the data it receives to control an operation of the fluid-transfer pump 3. The control commands for the pump 3 may be transmitted via the same communication link 16 as data from the pump to the control system, or via a separate communication link 16. When the control system 11 receives data from the optical sensor and the pump, it processes the data and determines a suitable way to operate the fluid-transfer pump 3 based upon the data, which may be to change an operation of the pump and in some instances be to keep the pump operation as it currently is. If the data from the optical sensor 13 indicates that the flow of fluid past the first measurement point 14 is diminishing, the control system 11 may arrange for the fluid-transfer pump 3 to reduce its pumping power. If the control system 11 determines that the amount of fluid at the first measurement position 14 is below a predetermined minimum level, it may arrange for the pump 3 to stop or at least reduce its pumping power.

The control system 11 can also have a communication link 16 to the engine 9 and could be configured to arrange for the engine 9 to turn off when the pump 11 no longer requires power. However, as the engine 9 may be needed to power other units, the control system 11 could alternatively have a communication link 16 configured such that it provides a way for the control system 11 to switch off the PTO supplying power to the pump 3 or to disengage the pump from the PTO.

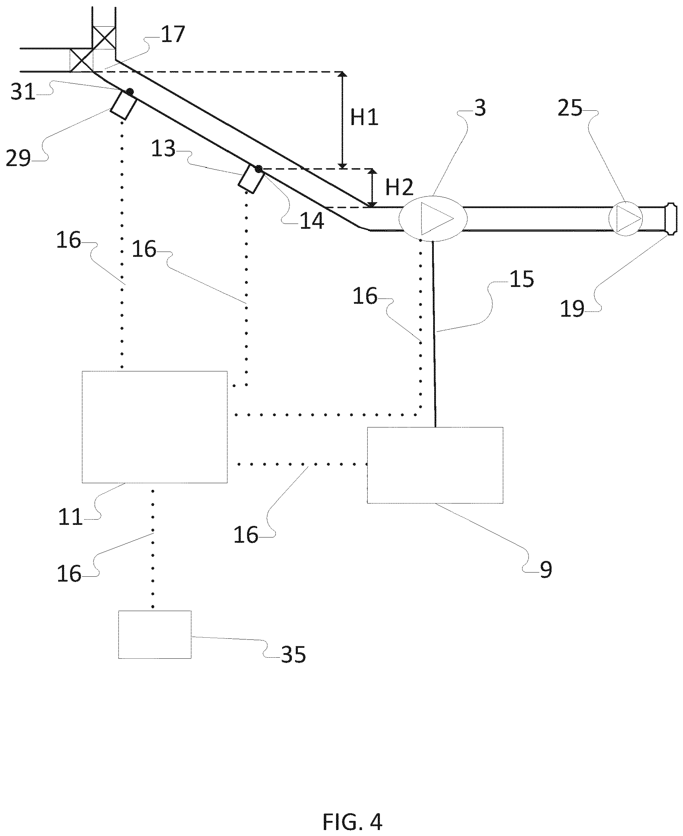

Figure 4 is a schematic showing part of a vehicular fluid dispensing system 1 according to some embodiments and an engine 9 of the tank truck, or tractor vehicle connected to a tank trailer, on which the fluid dispensing system 1 is installed.

The fluid conduit system 5 in fig. 4 is similar in construction to that shown in figs. 2 and 3. A first sensor 13 measures a first parameter at a measurement position 14 upstream from a fluid-transfer pump 3 and downstream from a conduit inlet 17 and may be an optical sensor as in the embodiment shown in fig. 3. The first sensor generates a first sensor signal in response to the measurement of the first parameter and transmits the first sensor signal to a control system 11 via a communication link 16.

In addition, a second sensor 29 measures a second parameter at a second measurement position 31 downstream from the fluid tank 7 and upstream from the fluid-transfer pump 3. The second sensor 29 generates a second sensor signal in response to the measurement of the second parameter and transmits the second sensor signal to the control system 11 via a communication link 16. The second sensor 29 could be a proximity sensor, such as an optical sensor, which, together with the first sensor 13, provides the possibility for a more graduated response as one of the sensors, due to their spacing apart, can provide a measurement upstream from the other sensor. This allows for the control system 11 to have better data to act on when determining when and how much to lower the pumping power of the pump 3 as the fluid remaining in the conduit system 5 diminishes, and when to stop the pump 3.

Alternatively, the second sensor 29 could be a sensor, which detects vibration in the fluid conduit system 5 indicative of air passing through the fluid conduit system 5 as this could also provide data for the control system 11 to determine a course of action in controlling an operation of the pump 3. When it is detected that air is passing through the fluid conduit system 5, the control system 11 can use this data together with the data from the other sensor, and possibly data from the fluid-transfer pump 3, to control the pump 3 and thereby improve its performance.

In the embodiment shown in fig. 4, the first and second sensor 13, 29 are shown as being connected to the control system 11 via separate communication links 16, but the two sensors 13, 29 may alternatively, or additionally, have a communication link 16 to each other. If linked to each other, it may be that only one of the two sensors is connected to the control system 11 via a communication link 16 or that the sensors share a common communication link 16 to the control system 11. Any of the communication links 16 may be wired or wireless or both.

As described for the embodiment shown in fig. 3, the fluid-transfer pump 3 is powered by the engine 9 and can send data to the control system 11 via a communication link 16 between the pump 3 and control system 11. The control system 11 thus receives three sets of data via communications links 16: the first sensor signal, the second sensor signal and a set of data from the pump 3, and it uses the data it receives to control an operation of the fluid-transfer pump 3.

The control system also has a communication link 16 to a user interface 35 to which it can send data on the results of measurements from the first and second sensor and a status of the fluid-transfer pump 3. The control system 11 may also present the actions it has taken or intends to take, such as increasing/reducing the pumping power, stopping the pump, etc. An operator of the fluid dispensing system 1 can read the data presented and may also be alerted by the user interface through e.g. one or more visual alerts such as blinking lights, one or more audible sounds, and/or one or more tactile notifications, which could be felt for example by the operator holding the user interface. In this way, the operator can be kept updated on the measurements and actions of the control system 11. The operator may then act on these notifications and, if deemed necessary, override the action of the control system 11 e.g. to allow the fluid-transfer pump 3 to continue running even when little or no fluid is detected at the measurement positions.

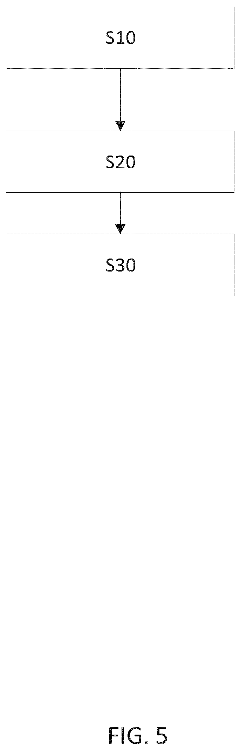

Figure 5 is a flow chart of the method of operating a vehicular fluid dispensing system 1 for a rigid tank truck, tank trailer, or stand-alone tank construction.

The system has a fluid conduit system with a conduit inlet and a conduit outlet, where the conduit inlet is connected to a fluid tank, a fluid-transfer pump connected to the fluid conduit system downstream from the conduit inlet and upstream from the conduit outlet, and a first sensor configured to measure at least a first parameter at a first measurement position downstream from the conduit inlet and upstream from the fluid-transfer pump, similar to the schematic shown in fig. 1.

In the method step S10 the pumping power of the fluid-transfer pump is turned on to cause fluid received by the conduit inlet to move towards the conduit outlet.

In the method step S20, the first parameter is measured by the first sensor and the first sensor provides a first sensor signal in response.

In method step S30 the control system receives the first sensor signal and controls an operation of the fluid-transfer pump based at least in part on the first sensor signal such as e.g. starting or stopping pumping, increasing or decreasing pumping power, and/or reversing pumping action. For example, if the control system determines that the flow of fluid at the first measurement position is diminishing, the pumping power could be reduced, and possibly the pump may even be stopped. As described above, the control system may also use further data in its processing such as, but not limited to, data from other one or more other sensors and/or data from the fluid-transfer pump.

The control system could, in a further method step, provide a notification to a user and/or a user interface about the results of measurements from any sensor(s) connected to it and/or a status of the fluid-transfer pump.

### LIST OF REFERENCE NUMBERS

- 1: Fluid dispensing system
- 3: Fluid-transfer pump
- 5: Fluid conduit system
- 7: Reservoir/fluid tank
- 9: Engine
- 11: Control system
- 13: First sensor
- 14: First measurement position
- 15: Electrical connection
- 16: Communication link
- 17: Conduit inlet
- 19: Conduit outlet
- 21: Valves
- 23: Compartments
- 25: Gauge
- 27: Secondary connection point
- 29: Second sensor
- 31: Second measurement position
- 33: Arrow denoting the vertical direction
- 35: User interface

## Claims

1. A vehicular fluid dispensing system (1), the system comprising:
- a fluid conduit system (5) comprising a conduit inlet (17) and a conduit outlet (19), the fluid conduit system (5) being configured to transport fluid between the fluid tank (7) and the conduit outlet (19), the conduit inlet (17) being configured to connect to a fluid tank (7),
- a fluid-transfer pump (3) connected to the fluid conduit system (5), and configured to move fluid received by the conduit inlet (17) towards the conduit outlet (19), when in use,
- a first sensor (13) configured to measure at least a first parameter at a first measurement position (14) downstream from the conduit inlet (17) and upstream from the fluid-transfer pump (3), and further configured to provide a first sensor signal in response thereto,
**characterised by**:
- a second sensor (29) configured to measure at least a second parameter at a second measurement position (31) downstream from the conduit inlet (17) and upstream from the first measurement position (14), and further configured to provide a second sensor signal in response thereto, and
- a control system (11) configured to receive the first sensor signal from the first sensor (13) and the second sensor signal from the second sensor and to control an operation of the fluid-transfer pump (3) based at least in part thereon,
wherein the control system (11) is further configured to
- interpret the first sensor signal to arrive at a measure of the presence of and/or amount of fluid present in the fluid conduit system (5) at the first measurement position (14),
- receive data from the fluid-transfer pump (3),
- control an operation of the fluid-transfer pump (3) based on the first sensor signal, on the second sensor signal, and on the data from the fluid-transfer pump, and
- gradually decrease the pumping power of the fluid-transfer pump (3) if a series of first sensor signals indicate that less and less fluid is detected at the first measurement position (14).

2. A vehicular fluid dispensing system (1) according to claim 1, wherein the first sensor (13) is an optical sensor, a mechanical sensor, a thermistor, a conductivity sensor, a flow sensor, a pressure sensor, or a proximity sensor.

3. A vehicular fluid dispensing system (1) according to any of the previous claims, wherein the fluid-transfer pump (3) comprises a port inlet and the first measurement position (14) is at a location that is gravitationally lower than the conduit inlet (17) and gravitationally higher than the port inlet of the fluid-transfer pump (3).

4. A vehicular fluid dispensing system (1) according to any of the previous claims, wherein controlling an operation of the fluid-transfer pump (3) comprises one or more of: starting or stopping pumping, increasing or decreasing pumping power, and/or reversing pumping action.

5. A vehicular fluid dispensing system (1) according to any of the previous claims, wherein the control system (11) is further configured to arrange for the fluid-transfer pump (3) to cease or reduce its pumping power in response to a determination that the amount of fluid at the first measurement position (14) is below a predetermined minimum level.

6. A vehicular fluid dispensing system (1) according to any of the previous claims, wherein the second sensor (29) is an optical sensor, a mechanical sensor, a thermistor, a conductivity sensor, a flow sensor, a pressure sensor, or a proximity sensor.

7. A vehicular fluid dispensing system (1) according to any of the previous claims, wherein the fluid-transfer pump (3) is configured to be powered by an engine of a tank truck on which the fluid dispensing system is installed, or by an engine of a tractor vehicle connected to a tank trailer on which the fluid dispensing system (1) is installed, or by an engine connected to the stand-alone tank construction on which the fluid dispensing system (1) is installed.

8. A vehicular fluid dispensing system (1) according to any of the previous claims, wherein the control system (11) is further configured to notify a user and/or a user interface about the results of measurements from any connected sensor(s) and/or a status of the fluid-transfer pump (3).

9. A vehicular fluid dispensing system (1) according to any of the previous claims, wherein the vehicular fluid dispensing system (1) further comprises a fluid tank (7), which is connected to the fluid conduit system (5).

10. A rigid tank truck, tank trailer, or stand-alone tank construction comprising a vehicular fluid dispensing system (1) according to any of claims 1 - 9.

11. A method of operating a vehicular fluid dispensing system (1) for a rigid tank truck, tank trailer, or stand-alone tank construction, the system comprising:
- a fluid conduit system (5) comprising a conduit inlet (17) and a conduit outlet (19), the conduit inlet (17) being connected to a fluid tank (7),
- a fluid-transfer pump (3) connected to the fluid conduit system (5) downstream from the conduit inlet (17) and upstream from the conduit outlet (19), and
- a first sensor (13) configured to measure at least a first parameter at a first measurement position (14) downstream from the conduit inlet (17) and upstream from the fluid-transfer pump (3), and further configured to provide a first sensor signal in response thereto,
- a second sensor (29) configured to measure at least a second parameter at a second measurement position (31) downstream from the conduit inlet (17) and upstream from the first measurement position (14), and further configured to provide a second sensor signal in response thereto, and
- a control system (11) configured to receive the first sensor signal from the first sensor (13), to interpret the first sensor signal to arrive at a measure of the presence of and/or amount of fluid present in the fluid conduit system (5) at the first measurement position (14), and to control an operation of the fluid-transfer pump (3) based at least in part thereon, the control system being further configured to receive the second sensor signal and to receive data from the fluid-transfer pump (3),
wherein the method comprises the steps of:
- turning on the pumping power of the fluid-transfer pump (3) to cause fluid received by the conduit inlet (17) to move towards the conduit outlet (19),
- measuring, by the first sensor (13), the first parameter and providing the first sensor signal in response thereto,
- measuring, by the second sensor (29), the second parameter and providing the second sensor signal in response thereto,
- providing data by the fluid-transfer pump,
- receiving, by the control system (11), the first sensor signal, the second sensor signal, and the data from the fluid-transfer pump, and controlling an operation of the fluid-transfer pump (3) based at least in part on the first sensor signal,
- determining, by the control system, whether a series of first sensor signals indicate that less and less fluid is detected at the first measurement position (14), and if so, decreasing gradually the pumping power of the fluid-transfer pump (3).

## Patentansprüche

1. Fahrzeugfluidabgabesystem (1), wobei das System Folgendes umfasst:
- ein Fluidleitungssystem (5), umfassend einen Leitungseinlass (17) und einen Leitungseinlass (19), wobei das Fluidleitungssystem (5) dafür konfiguriert ist, Fluid zwischen dem Fluidtank (7) und dem Leitungseinlass (19) zu transportieren, wobei der Leitungseinlass (17) dafür konfiguriert ist, sich mit einem Fluidtank (7) zu verbinden,
- eine Fluidtransferpumpe (3), die mit dem Fluidleitungssystem (5) verbunden ist und dafür konfiguriert ist, das vom Leitungseinlass (17) aufgenommene Fluid zum Leitungseinlass (19) hin zu bewegen, wenn sie in Betrieb ist.
- einen ersten Sensor (13), der dafür konfiguriert ist, zumindest einen ersten Parameter an einer ersten Messposition (14) stromabwärts von dem Leitungseinlass (17) und stromaufwärts von der Fluidtransferpumpe (3) zu messen, und weiter dafür konfiguriert ist, als Reaktion darauf ein erstes Sensorsignal zu liefern,
**gekennzeichnet durch**:
- einen zweiten Sensor (29), der dafür konfiguriert ist, zumindest einen zweiten Parameter an einer zweiten Messposition (31) stromabwärts von dem Leitungseinlass (17) und stromaufwärts von der ersten Messposition (14) zu messen, und weiter dafür konfiguriert ist, als Reaktion darauf ein zweites Sensorsignal zu liefern, und
- ein Steuerungssystem (11), das dafür konfiguriert ist, das erste Sensorsignal vom ersten Sensor (13) und das zweite Sensorsignal vom zweiten Sensor zu empfangen und einen Betrieb der Fluidtransferpumpe (3) zumindest teilweise auf Grundlage davon zu steuern,
wobei das Steuerungssystem (11) weiter zu Folgendem konfiguriert ist:
- das erste Sensorsignal zu interpretieren, um zu einem Maß für das Vorhandensein von und/oder einer Menge von im Fluidleitungssystem (5) an der ersten Messposition (14) vorhandenen Fluid zu kommen,
- Daten von der Fluidtransferpumpe (3) zu empfangen,
- einen Betrieb der Fluidtransferpumpe (3) auf Grundlage des ersten Sensorsignals, des zweiten Sensorsignals und der Daten von der Fluidtransferpumpe zu steuern und
- die Pumpleistung der Fluidtransferpumpe (3) schrittweise zu verringern, falls eine Reihe erster Sensorsignale anzeigt, dass an der ersten Messposition (14) immer weniger Fluid erfasst wird.

2. Fahrzeugfluidabgabesystem (1) nach Anspruch 1, wobei der erste Sensor (13) ein optischer Sensor, ein mechanischer Sensor, ein Thermistor, ein Leitfähigkeitssensor, ein Durchflusssensor, ein Drucksensor oder ein Näherungssensor ist.

3. Fahrzeugfluidabgabesystem (1) nach einem der vorstehenden Ansprüche, wobei die Fluidtransferpumpe (3) einen Anschlusseinlass aufweist und sich die erste Messposition (14) an einer Stelle befindet, die gravitativ tiefer als der Leitungseinlass (17) und gravitativ höher als der Anschlusseinlass der Fluidtransferpumpe (3) liegt.

4. Fahrzeugfluidabgabesystem (1) nach einem der vorstehenden Ansprüche, wobei das Steuern eines Betriebs der Fluidtransferpumpe (3) eines oder mehrere von Folgendem umfasst: Starten oder Stoppen des Pumpens, Erhöhen oder Vermindern der Pumpenleistung, und/oder Umkehren der Pumpwirkung.

5. Fahrzeugfluidabgabesystem (1) nach einem der vorstehenden Ansprüche, wobei das Steuerungssystem (11) weiter dafür konfiguriert ist, zu veranlassen, dass die Fluidtransferpumpe (3) als Reaktion auf eine Feststellung, dass die Fluidmenge an der ersten Messposition (14) unter einem vorbestimmten Mindestpegel liegt, ihre Pumpleistung einstellt oder verringert.

6. Fahrzeugfluidabgabesystem (1) nach einem der vorstehenden Ansprüche, wobei der zweite Sensor (29) ein optischer Sensor, ein mechanischer Sensor, ein Thermistor, ein Leitfähigkeitssensor, ein Durchflusssensor, ein Drucksensor oder ein Näherungssensor ist.

7. Fahrzeugfluidabgabesystem (1) nach einem der vorstehenden Ansprüche, wobei die Fluidtransferpumpe (3) dafür konfiguriert ist, von einem Motor eines Tanklastwagens, auf dem das Fluidabgabesystem installiert ist, oder von einem Motor eines Zugfahrzeugs, das mit einem Tankanhänger verbunden ist, auf dem das Fluidabgabesystem (1) installiert ist, oder von einem Motor, der mit der eigenständigen Tankkonstruktion verbunden ist, auf der das Fluidabgabesystem (1) installiert ist, angetrieben zu werden.

8. Fahrzeugfluidabgabesystem (1) nach einem der vorstehenden Ansprüche, wobei das Steuerungssystem (11) weiter dafür konfiguriert ist, einen Benutzer und/oder eine Benutzeroberfläche über die Ergebnisse von Messungen von jeglichem/n angeschlossenen Sensor(en) und/oder einen Status der Fluidtransferpumpe (3) zu benachrichtigen.

9. Fahrzeugfluidabgabesystem (1) nach einem der vorstehenden Ansprüche, wobei das Fahrzeugfluidabgabesystem (1) weiter einen Fluidtank (7) umfasst, der mit dem Fluidleitungssystem (5) verbunden ist.

10. Starrer Tanklastwagen, Tankanhänger oder eigenständige Tankkonstruktion, umfassend ein Fahrzeugfluidabgabesystem (1) nach einem der Ansprüche 1-9.

11. Verfahren zum Betreiben eines Fahrzeugfluidabgabesystems (1) für einen starren Tanklastwagen, einen Tankanhänger oder eine eigenständige Tankkonstruktion, wobei das System Folgendes umfasst:
- ein Fluidleitungssystem (5), umfassend einen Leitungseinlass (17) und einen Leitungseinlass (19), wobei der Leitungseinlass (17) mit einem Fluidtank (7) verbunden ist,
- eine Fluidtransferpumpe (3), die mit dem Fluidleitungssystem (5) stromabwärts von dem Leitungseinlass (17) und stromaufwärts von dem Leitungseinlass (19) verbunden ist, und
- einen ersten Sensor (13), der dafür konfiguriert ist, zumindest einen ersten Parameter an einer ersten Messposition (14) stromabwärts von dem Leitungseinlass (17) und stromaufwärts von der Fluidtransferpumpe (3) zu messen, und weiter dafür konfiguriert ist, als Reaktion darauf ein erstes Sensorsignal zu liefern,
- einen zweiten Sensor (29), der dafür konfiguriert ist, zumindest einen zweiten Parameter an einer zweiten Messposition (31) stromabwärts von dem Leitungseinlass (17) und stromaufwärts von der ersten Messposition (14) zu messen, und weiter dafür konfiguriert ist, als Reaktion darauf ein zweites Sensorsignal zu liefern, und
- ein Steuerungssystem (11), das dafür konfiguriert ist, das erste Sensorsignal vom ersten Sensor (13) zu empfangen, das erste Sensorsignal zu interpretieren, um zu einem Maß für das Vorhandensein von und/oder einer Menge von im Fluidleitungssystem (5) an der ersten Messposition (14) vorhandenen Fluid zu kommen, und einen Betrieb der Fluidtransferpumpe (3) zumindest teilweise auf Grundlage davon zu steuern, wobei das Steuerungssystem weiter dafür konfiguriert ist, das zweite Sensorsignal zu empfangen und Daten von der Fluidtransferpumpe (3) zu empfangen,
wobei das Verfahren die folgenden Schritte umfasst:
- Einschalten der Pumpleistung der Fluidtransferpumpe (3), um zu bewirken, dass das vom Leitungseinlass (17) aufgenommene Fluid sich hin zum Leitungseinlass (19) bewegt,
- Messen des ersten Parameters durch den ersten Sensor (13) und Liefern des ersten Sensorsignals als Reaktion darauf,
- Messen des zweiten Parameters durch den zweiten Sensor (29) und Liefern des zweiten Sensorsignals als Reaktion darauf,
- Liefern von Daten durch die Fluidtransferpumpe,
- Empfangen des ersten Sensorsignals, des zweiten Sensorsignals und der Daten von der Fluidtransferpumpe durch das Steuerungssystem (11) und Steuern eines Betriebs der Fluidtransferpumpe (3) zumindest teilweise auf der Grundlage des ersten Sensorsignals,
- Feststellen, durch das Steuerungssystem, ob eine Reihe erster Sensorsignale anzeigt, dass an der ersten Messposition (14) immer weniger Fluid erfasst wird, und falls ja, schrittweises Verringern der Pumpleistung der Fluidtransferpumpe (3).

## Revendications

1. Système de distribution de fluides pour véhicule (1), le système comprenant :
- un système de conduit de fluide (5) comprenant une entrée de conduit (17) et une sortie de conduit (19), le système de conduit de fluide (5) étant configuré pour transporter du fluide entre le réservoir de fluide (7) et la sortie de conduit (19), l'entrée de conduit (17) étant configurée pour être reliée à un réservoir de fluide (7),
- une pompe de transfert de fluide (3) reliée au système de conduit de fluide (5), et configurée pour déplacer le fluide reçu par l'entrée de conduit (17) vers la sortie de conduit (19), lorsqu'elle est utilisée,
- un premier capteur (13) configuré pour mesurer au moins un premier paramètre à une première position de mesure (14) en aval de l'entrée de conduit (17) et en amont de la pompe de transfert de fluide (3), et configuré en outre pour fournir un signal de premier capteur en réponse à celui-ci,
**caractérisé par** :
- un second capteur (29) configuré pour mesurer au moins un second paramètre à une seconde position de mesure (31) en aval de l'entrée de conduit (17) et en amont de la première position de mesure (14), et configuré en outre pour fournir un signal de second capteur en réponse à celui-ci, et
- un système de commande (11) configuré pour recevoir le signal du premier capteur (13) et le signal du second capteur et pour commander le fonctionnement de la pompe de transfert de fluide (3) en se basant au moins en partie sur ceux-ci,
dans lequel le système de commande (11) est en outre configuré pour
- interpréter le signal de premier capteur pour obtenir une mesure de la présence et/ou de la quantité de fluide présente dans le système de conduit de fluide (5) à la première position de mesure (14),
- recevoir des données de la pompe de transfert de fluide (3),
- commander le fonctionnement de la pompe de transfert de fluide (3) en fonction du signal de premier capteur, du signal de second capteur et des données provenant de la pompe de transfert de fluide, et
- diminuer progressivement la puissance de pompage de la pompe de transfert de fluide (3) si une série de signaux de premier capteur indiquent que de moins en moins de fluide est détecté à la première position de mesure (14).

2. Système de distribution de fluides pour véhicule (1) selon la revendication 1, dans lequel le premier capteur (13) est un capteur optique, un capteur mécanique, une thermistance, un capteur de conductivité, un capteur de débit, un capteur de pression ou un capteur de proximité.

3. Système de distribution de fluides pour véhicule (1) selon l'une quelconque des revendications précédentes, dans lequel la pompe de transfert de fluide (3) comprend une entrée d'orifice et la première position de mesure (14) est à un emplacement qui est gravitationnellement plus bas que l'entrée de conduit (17) et gravitationnellement plus haut que l'entrée d'orifice de la pompe de transfert de fluide (3).

4. Système de distribution de fluides pour véhicule (1) selon l'une quelconque des revendications précédentes, dans lequel la commande du fonctionnement de la pompe de transfert de fluide (3) comprend une ou plusieurs des actions suivantes : démarrer ou arrêter le pompage, augmenter ou diminuer la puissance de pompage et/ou inverser l'action de pompage.

5. Système de distribution de fluides pour véhicule (1) selon l'une quelconque des revendications précédentes, dans lequel le système de commande (11) est en outre configuré pour faire en sorte que la pompe de transfert de fluide (3) cesse ou réduise sa puissance de pompage en réponse à la détermination que la quantité de fluide à la première position de mesure (14) est inférieure à un niveau minimum prédéterminé.

6. Système de distribution de fluides pour véhicule (1) selon l'une quelconque des revendications précédentes, dans lequel le second capteur (29) est un capteur optique, un capteur mécanique, une thermistance, un capteur de conductivité, un capteur de débit, un capteur de pression ou un capteur de proximité.

7. Système de distribution de fluides pour véhicule (1) selon l'une quelconque des revendications précédentes, dans lequel la pompe de transfert de fluide (3) est configurée pour être alimentée par un moteur d'un camion-citerne, sur lequel le système de distribution de fluides est installé, ou par un moteur d'un tracteur relié à une remorque-citerne, sur laquelle le système de distribution de fluides (1) est installé, ou par un moteur relié à la construction de réservoir autonome, sur laquelle le système de distribution de fluides (1) est installé.

8. Système de distribution de fluides pour véhicule (1) selon l'une quelconque des revendications précédentes, dans lequel le système de commande (11) est en outre configuré pour notifier un utilisateur et/ou une interface utilisateur sur les résultats des mesures provenant de capteur(s) relié(s) et/ou un statut de la pompe de transfert de fluide (3).

9. Système de distribution de fluides pour véhicule (1) selon l'une quelconque des revendications précédentes, dans lequel le système de distribution de fluides pour véhicule (1) comprend en outre un réservoir de fluide (7) qui est relié au système de conduit de fluide (5).

10. Camion-citerne rigide, remorque-citerne ou construction de réservoir autonome comprenant un système de distribution de fluides pour véhicule (1) selon l'une quelconque des revendications 1 à 9.

11. Procédé de fonctionnement d'un système de distribution de fluides pour véhicule (1) destiné à un camion-citerne rigide, une remorque-citerne ou une construction de réservoir autonome, le système comprenant :
- un système de conduit de fluide (5) comprenant une entrée de conduit (17) et une sortie de conduit (19), l'entrée de conduit (17) étant reliée à un réservoir de fluide (7),
- une pompe de transfert de fluide (3) reliée au système de conduit de fluide (5) en aval de l'entrée de conduit (17) et en amont de la sortie de conduit (19), et
- un premier capteur (13) configuré pour mesurer au moins un premier paramètre à une première position de mesure (14) en aval de l'entrée de conduit (17) et en amont de la pompe de transfert de fluide (3), et configuré en outre pour fournir un signal de premier capteur en réponse à celui-ci,
- un second capteur (29) configuré pour mesurer au moins un second paramètre à une seconde position de mesure (31) en aval de l'entrée de conduit (17) et en amont de la première position de mesure (14), et configuré en outre pour fournir un signal de second capteur en réponse à celui-ci, et
- un système de commande (11) configuré pour recevoir le signal du premier capteur (13), pour interpréter le signal de premier capteur pour obtenir la mesure de la présence et/ou de la quantité de fluide présente dans le système de conduit de fluide (5) à la première position de mesure (14), et pour commander un fonctionnement de la pompe de transfert de fluide (3) basé au moins en partie sur celle-ci, le système de commande étant en outre configuré pour recevoir le signal de second capteur et pour recevoir des données de la pompe de transfert de fluide (3),
dans lequel le procédé comprend les étapes de :
- activation de la puissance de pompage de la pompe de transfert de fluide (3) pour que le fluide reçu par l'entrée de conduit (17) se déplace vers la sortie de conduit (19),
- mesure, par le premier capteur (13), du premier paramètre et fourniture du signal de premier capteur en réponse à celui-ci,
- mesure, par le second capteur (29), du second paramètre et fourniture du signal de second capteur en réponse à celui-ci,
- fourniture de données par la pompe de transfert de fluide,
- réception, par le système de commande (11), du signal de premier capteur, du signal de second capteur et des données de la pompe de transfert de fluide, et commande du fonctionnement de la pompe de transfert de fluide (3) basé au moins en partie sur le signal de premier capteur,
- détermination, par le système de commande, si une série de signaux de premier capteur indiquent que de moins en moins de fluide est détecté à la première position de mesure (14), et si tel est le cas, diminution progressive de la puissance de pompage de la pompe de transfert de fluide (3).
